# EUROPÄISCHE PATENTSCHRIFT

(11) **EP 2 054 133 B1**
(45) Veröffentlichungstag und Bekanntmachung des Hinweises auf die Patenterteilung: **13.04.2016**
(21) Anmeldenummer: 07726452.1
(22) Anmeldetag: 21.02.2007
(51) Int. Cl.: B01D 29/21, B01D 29/96, B01D 35/16, F01M 11/03

(54) **FLÜSSIGKEITSFILTER, INSBESONDERE FÜR KRAFTFAHRZEUGE**
LIQUID FILTER, PARTICULARLY FOR MOTOR VEHICLES
FILTRE À LIQUIDE, EN PARTICULIER POUR VÉHICULES AUTOMOBILES

(30) Priorität: 25.08.2006 DE 202006013088 U
(43) Veröffentlichungstag der Anmeldung: 06.05.2009
(73) Patentinhaber: MANN+HUMMEL GmbH, 71638 Ludwigsburg (DE)
(72) Erfinder: RÖSGEN, André, 73630 Remshalden (DE)
(74) Vertreter: Seyboth, Matthias
(86) Internationale Anmeldenummer: PCT/EP2007/051631
(87) Internationale Veröffentlichungsnummer: WO 2008/022813

(56) Entgegenhaltungen:
- WO-A-00/21640
- DE-A1- 19 707 132
- DE-U1- 20 213 512

## Beschreibung

### Technisches Gebiet

Die Erfindung betrifft einen Flüssigkeitsfilter nach dem Oberbegriff des Anspruches 1.

### Stand der Technik

Es sind Flüssigkeitsfilter bekannt, welche über einen Filterkopf, einen Topf und ein in dem Topf angeordnetes Filterelement verfügen. Beim Abschrauben des Topfes von dem Filterkopf tritt Kraftstoff über den Rand des Topfes, da Kraftstoff oder Öl aus oberhalb des Topfes angeordneten Volumina nachströmt und somit den Topf zum Überlaufen bringt.

Die WO 00/21640 A1 zeigt einen Filter mit einem Filterkopf, einen Topf und ein Filterelement, wobei das Filterelement in dem Topf angeordnet ist und über Positioniervorrichtungen verfügt, welche das Filterelement in dem Topf positionieren.

Der DE 197 07 132 A1 ist ein Filter zu entnehmen, ein Gehäuse, das aus wenigstens zwei Gehäuseteilen besteht, und ein Filterelement, das im Gehäuse befestigt ist. Es ist wenigstens ein Rastmittel vorgesehen, mittels dem eine lösbare Rastverbindung zwischen Filterelement und wenigstens einem der Gehäuseteile herstellbar ist. Eine Filterpatrone ist in ein Filtergehäuse einsetzbar bzw. herausnehmbar, in dem die Patrone definiert an einem Gehäuseteil lösbar befestigt ist.

Aufgabe der Erfindung ist es daher einen Flüssigkeitsfilter zu schaffen, welcher einfach aufgebaut und kostengünstig herstellbar ist und die oben genannten Nachteile vermeidet. Diese Aufgabe wird durch die Merkmale des Anspruches 1 gelöst.

### Offenbarung der Erfindung

Der erfindungsgemäße Flüssigkeitsfilter weist einen Filterkopf, einen Topf und ein Filterelement auf, wobei das Filterelement derart in dem Topf angeordnet ist, dass ein Einlass dichtend von einem Auslass getrennt ist. Derartige Flüssigkeitsfilter sind zur Reinigung von Kraftstoff oder Öl, insbesondere für Brennkraftmaschinen unter anderem in Fahrzeugen, geeignet. Das Filterelement verfügt über Führungsnasen, welche das Filterelement in dem Topf positionieren. Vor der Montage wird das Filterelement in den Topf vormontiert. Hierbei wird das Filterelement in eine Elementführung gedrückt und arretiert. Diese vormontierte Einheit wird anschließend an den Filterkopf geschraubt. Beim Lösen des Topfes von dem Filterkopf gleitet das Filterelement aus der Elementführung und bewegt sich axial nach oben, wodurch ein Volumen V freigegeben wird. In dieses Volumen kann Flüssigkeit einströmen, welche aus höher gelegenen Bereichen des Flüssigkeitsfilters in den Topf strömt. Somit ist ein tropffreier Filter elementwechsel möglich. Um das Abfließen der Flüssigkeit aus den höher angeordneten Bereichen zu erleichtern, können verschließbare Entlüftungsbohrungen vorgesehen sein, welche vor dem Lösen des Filters geöffnet werden und so Luft in diese höher angeordneten Bereich einströmen kann. Somit wird die Erzeugung eines Unterdrucks in dem Filter verhindert.

### Kurze Beschreibung der Zeichnungen

Weitere Einzelheiten der Erfindung werden nachfolgend anhand eines Ausführungsbeispiels näher erläutert. Hierbei zeigt
Figur 1 einen Flüssigkeitsfilter im Schnitt,
Figur 2 das Filterelement in perspektivischer Ansicht,
Figur 3 ein alternatives Filterelement in perspektivischer Ansicht,
Figur 4 den Flüssigkeitsfilter gemäß Figur 1 in teildemontiertem Zustand,
Figur 5 einen Ausschnitt aus der Elementführung des Topfes,
Figur 6 eine alternativ ausgestaltete Elementführung und
Figur 7 eine weitere Alternative der Elementführung.

### Ausführungsform(en) der Erfindung

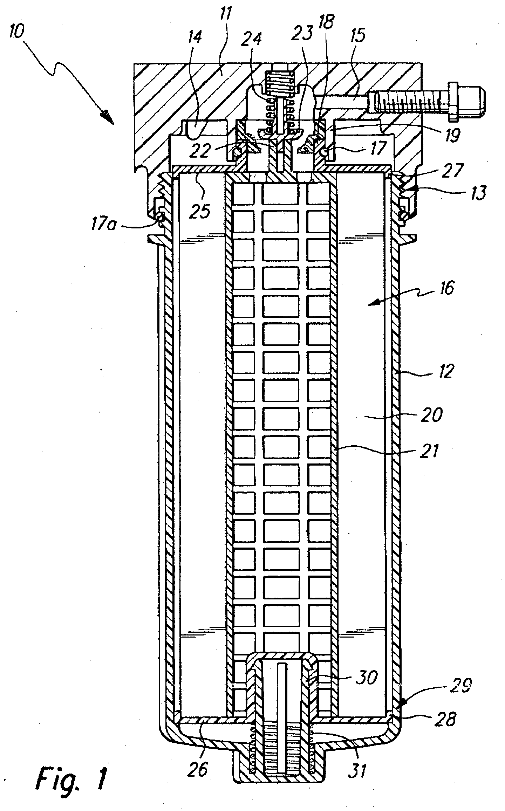

In Figur 1 ist ein Flüssigkeitsfilter 10 im Schnitt dargestellt. Der Flüssigkeitsfilter 10 verfügt über einen Filterkopf 11 und einen Topf 12. Der Topf 12 ist mit einer Schraubverbindung 13 mit dem Filterkopf 11, unter Verwendung einer O-Ring-Dichtung 17a, dichtend verbindbar. Alternativ können auch andere Verbindungsarten, wie z.B. eine Bajonettverbindung, verwendet werden. Innerhalb des Filterkopfes 11 sind Ein- und Auslässe 14, 15 für die zu reinigende bzw. gereinigte Flüssigkeit, insbesondere Kraftstoff oder Öl, vorgesehen. Diese Ein- und Auslässe 14, 15 können bei anderen Ausführungsformen auch am Topf 12 angeordnet sein. Der Einlass 14 ist durch ein Filterelement 16 dichtend von dem Auslass 15 getrennt. Zur Abdichtung des Filterelements 16 an dem Filterkopf 11 ist ein O-Ring 17 vorgesehen. Der O-Ring 17 ist auf einem Dichtansatz 18 des Filterelements 16 montiert und verpresst sich bei der Montage des Filterelementes 16 an einem Stutzen 19 des Filterkopfes 11. Das Filterelement 16 verfügt über ein ringförmig geschlossenes Filtermedium 20 und ein innerhalb des Filtermediums 20 angeordnetes Stützrohr 21, welches über eine Gitterstruktur verfügt, damit die Flüssigkeit ohne nennenswerten Druckverlust hindurchströmen kann. Das Stützrohr 21 verfügt über eine konzentrisch angeordnete Stiftgeometrie 22, welche bei korrekt eingesetztem Filterelement 16 ein Ventil 23 öffnet, wodurch der Kraftstoff aus der Filteranordnung ausströmen kann. Das Ventil 23 ist mit einer Spiralfeder 24 belastet, so dass das Ventil 23 geschlossen ist, wenn kein oder kein vorschriftsmäßiges Filterelement 16 eingebaut ist. Weiterhin ist das Ventil 23 beim Filterelementwechsel geschlossen.

Das Filterelement 16 verfügt weiterhin über eine obere Endscheibe 25 und eine untere Endscheibe 26. Die Endscheiben 25, 26 sind dichtend mit dem Filtermedium 20 verbunden. Hierbei kann die Verbindung durch z.B. eine Verklebung, eine Verschweißung oder eine sonstige Verbindung erzeugt sein. Der Dichtansatz 18 ist an der oberen Endscheibe 25 angeordnet. Weiterhin sind an der oberen Endscheibe 25 am Umfang verteilte Führungsnasen 27 angeordnet, welche nach außen ragen und das Filterelement 16 bei axialen Bewegungen in dem Topf 12 positionieren.

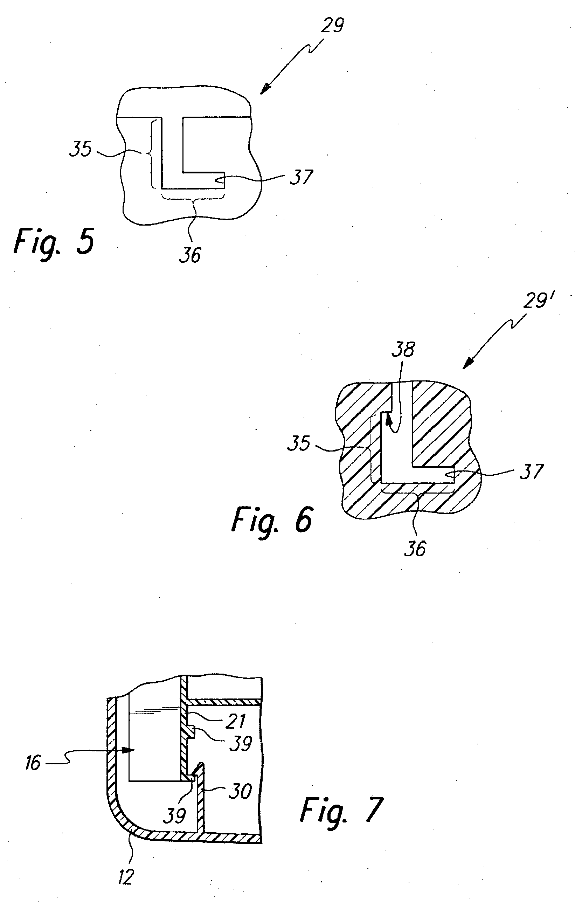

An der unteren Endscheibe 26 sind ebenfalls am Umfang verteilte Führungsnasen 28 angeordnet. Diese Führungsnasen 28 fixieren das Filterelement 16 in dem Topf 12. Hierzu verfügt der Topf 12 über eine axiale und radiale Elementführung 29, wie sie nachfolgend noch in Figur 5 näher beschrieben wird.

Der Topf 12 verfügt in seinem Bodenbereich über sich axial erstreckende Schnapphaken 30, welche von einer Feder 31 umschlossen sind. Die Feder 31 korrespondiert mit der unteren Endscheibe 26. In dem vormontierten Zustand des Filterelementes 16 in dem Topf 12 ist das Filterelement 16 durch die unteren Führungsnasen 28 in dem Topf 12 axial fixiert, wodurch die Feder 31 komprimiert ist. Beim Lösen des Topfes 12 von dem Filterkopf 11 fixiert der O-Ring 17 das Filterelement 16 in radialer Richtung derart auf dem Stutzen 19, dass eine analoge radiale Bewegung des Filterelementes 16 mit dem Topf 12 unterbleibt. Durch eine Drehung des Topfes 12 um z.B. 5° bis 10° können somit die Führungsnasen 28 axial aus der Elementführung 29 austreten. Bei anderen Ausgestaltungen können auch Drehungen bis ca. 45° erforderlich sein, damit die Führungsnasen 28 aus der Elementführung 29 austreten. Durch die Federkraft der Feder 31 wird das Filterelement um ca. 2 bis 3 cm nach oben gedrückt. Je nach Baugröße des Flüssigkeitsfilters können bei großvolumigen Flüssigkeitsfiltern auch größere bzw. bei sehr kleinen Flüssigkeitsfiltern auch kleinere Axialwege des Filterelements 16 erforderlich sein. Die untere Endscheibe 26 kann bis zu den Schnapphaken 30 ausfedern. Durch die Schnapphaken 30 wird eine weitere axiale Bewegung des Filterelementes 16 verhindert, so dass das Filterelement 16 bei der Demontage nicht an dem Stutzen 19 des Filterkopfes 11 verbleiben kann, sondern gemeinsam mit dem Topf 12 abgezogen wird. Durch das axiale Ausfedern des Filterelementes 16 aus der verrasteten Stellung wird ein Volumen in dem Topf 12 frei gegeben, in welches Kraftstoff einströmen kann. Somit kann dieses freigegebene Volumen eintretende Flüssigkeiten aufnehmen, so dass ein Überlaufen des Topfes 12 verhindert wird. Durch diese geometrische Ausgestaltung der Bauteile ist ein sauberer Filterelementwechsel möglich.

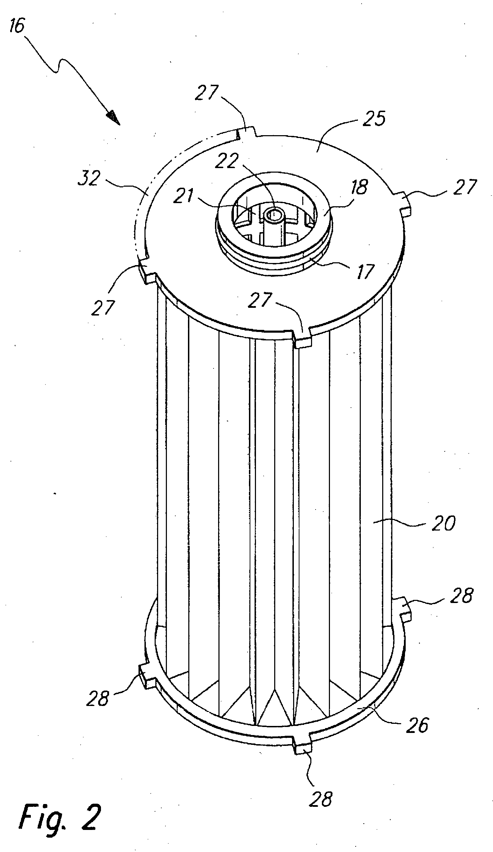

In Figur 2 ist ein Filterelement 16 in perspektivischer Ansicht dargestellt. Der Figur 1 entsprechende Bauteile sind mit gleichen Bezugszeichen versehen. Das Filterelement 16 verfügt über vier Führungsnasen 27, welche gleichmäßig verteilt am Umfang der oberen Endscheibe 25 angeordnet sind. Die Anzahl der Führungsnasen 27 ist beliebig, wobei vorzugsweise zwischen drei und fünf Führungsnasen 27 vorgesehen sind. Vorzugsweise sind die Führungsnasen 27 gleichmäßig am Umfang der Endscheibe verteilt angeordnet. Die Führungsnasen 27 erstrecken sich derart von dem Umfang der Endscheibe 25, dass zwischen den Führungsnasen 27 ein Spalt 32, bezogen auf die Geometrie des Topfes 12 (strich-zwei-punktiert dargestellt) gebildet ist. Durch diesen Spalt 32 kann die Flüssigkeit hindurchströmen. Die Führungsnasen 27 kontaktieren die Geometrie des Topfes 12, so dass ein Verkanten des Filterelementes 16 verhindert wird.

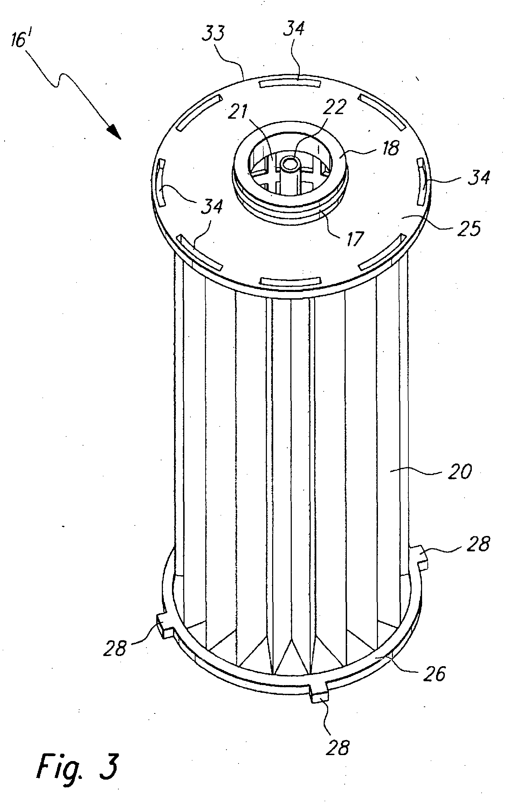

In Figur 3 ist ein alternatives Filterelement 16' dargestellt. Der Figur 2 entsprechende Bauteile sind mit gleichen Bezugszeichen versehen. Im Unterschied zu Figur 2 sind die Führungsnasen 27 als umlaufende Kante 33 ausgebildet, wobei Langlöcher 34 zur Durchströmung für die Flüssigkeit vorgesehen sind. Somit liegt das Filterelement 16 vollumfänglich an der Topfgeometrie an, wobei ein ausreichender Strömungsquerschnitt für die Flüssigkeit vorhanden ist.

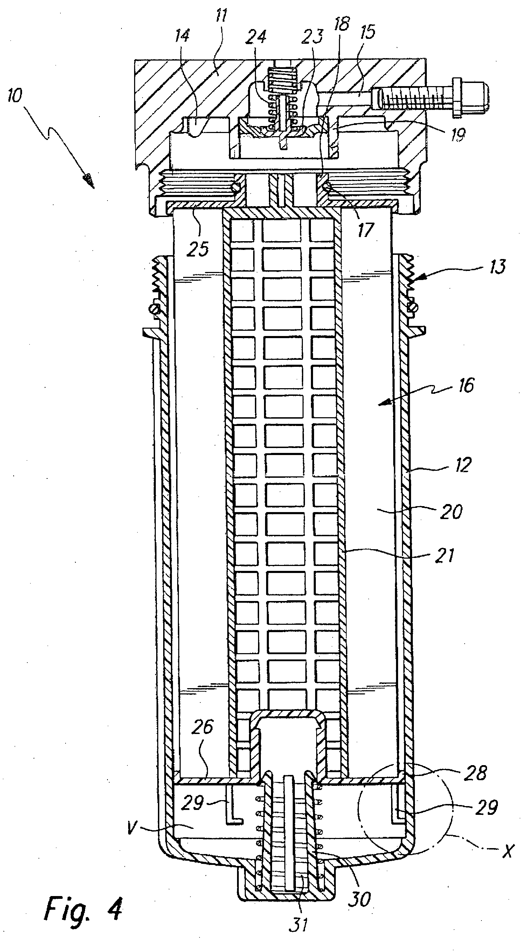

In Figur 4 ist der Flüssigkeitsfilter gemäß Figur 1 in teildemontiertem Zustand dargestellt. Der Figur 1 entsprechende Bauteile sind mit gleichen Bezugszeichen versehen. Die Schraubverbindung 13 zwischen dem Filterkopf 11 und dem Topf 12 ist in gelöster Stellung dargestellt. Das Filterelement 16 ist aus der Elementführung 29 ausgerastet und wurde durch die Feder 31 nach oben gedrückt, wodurch ein Volumen V im unteren Topfbereich freigegeben wurde.

Da das Filterelement 16 axial nach unten verschoben ist, kontaktiert die Stiftgeometrie 22 nicht mehr das Ventil 23. Die Feder 24 drückt das Ventil 23 gegen den Ventilsitz, wodurch das Ventil 23 geschlossen ist und der Auslass 15 nicht mehr mit der Umgebung kommunizieren kann. Erst wenn ein korrektes Filterelement 16 eingesetzt und montiert ist, wird das Ventil 23 wieder vom Ventilsitz abgehoben und das Innere des Filters 10 kann wieder mit dem Auslass 15 kommunizieren.

In Figur 5 ist ein Ausschnitt aus der Elementführung 29 des Topfes 12 dargestellt. Die Elementführung 29 verfügt über einen Axialbereich 35 und einen Horizontalbereich 36. Diese Geometrien 35, 36 ragen in das Innere des Topfes 12 hinein. Zur Vormontage des Filterelements 16 in dem Topf 12 werden die Führungsnasen 28 in den Axialbereich 35 eingeführt und bis zu dem Horizontalbereich 36 geschoben. Durch eine anschließende Drehung des Filterelements 16 um 5° bis 10° in dem Topf 12 ist das Filterelement 16 axial in dem Topf 12 fixiert. Hierbei verfügt der Horizontalbereich 36 über einen Anschlag 37, welcher ein Überdrehen des Filterelementes 16 in dem Topf verhindert. Bei alternativen Ausgestaltungen des Horizontalbereichs 36 kann dieser Bereich auch geneigt ausgeführt sein.

In Figur 6 ist eine alternative Ausgestaltung der Elementführung 29 gemäß Figur 5 dargestellt. Diese Elementführung 29' verfügt analog zu Figur 5 über einen Axialbereich 35 und einen Horizontalbereich 36. Beabstandet zu dem Horizontalbereich 36 ist in dem Axialbereich 35 ein Absatz 38 angeordnet. Dieser Absatz 38 ist in, zu dem Horizontalbereich 36 entgegen gesetzter Drehrichtung und axial zu dem Horizontalbereich versetzt positioniert. Der axiale Abstand zwischen dem Horizöntalbereich 36 und dem Absatz 38 beträgt ca. 20 mm. Hierbei ist der Abstand derart auszulegen, dass das Filterelement bei der Demontage einen ausreichenden Axialweg zurücklegt, dass ein ausreichend großes Volumen freigegeben wird. Der Absatz 38 dient beim Öffnen der Vorrichtung zur Fixierung des Filterelements 16 im Topf 12, wodurch ein "Hängenbleiben" des Elements am Filterkopf 11 verhindert wird. Im vormontierten Zustand des Filterelements 16 im Topf 12 sind die Führungsnasen 28 in dem Horizontalbereich 36 geführt und somit das Element 16 in axialer Richtung gehalten. Bei der Demontage wird das Filterelement 16 aus dem Horizontalbereich 36 heraus gedreht, bis die Führungsnasen 28 an dem Axialbereich 35 axial aus dem Topf 12 herausgleiten. Das vollständige Herausgleiten des Filterelements aus dem Topf 12 wird durch den Absatz 28 verhindert, da die Führungsnasen 38 an den Ansatz 38 anstoßen und der axiale Weg des Filterelements 16 somit nach ca. 2 cm begrenzt wird. Anstelle einer Nut-Feder-Ausgestaltung der Elementführung 29 können die Führungsnasen 28 auch als Schnappnasen ausgebildet sein, welche mit entsprechenden Geometrien an dem Topf 12 korrespondieren. Hierzu kann der Topf 12 über am Umfang verteilt angeordnete Geometrien in Form eines Vielkants verfügen.

In Figur 7 ist eine weitere Alternative der erfindungsgemäßen Fixierung des Filterelements 16 in dem Topf 12 dargestellt. Bei dieser Ausführung verfügt das Stützrohr 21 über Nasen 39, welche die Lage des Filterelements 16 im Topf 12 fixieren. Hierzu verfügt der Topf 12 über Schnapphaken 30 an welchen die Nasen 39 arretiert werden.

## Patentansprüche

1. Flüssigkeitsfilter, insbesondere für Kraftfahrzeuge, aufweisend einen Filterkopf (11), einen Topf (12) und ein Filterelement (16), wobei das Filterelement (16) in dem Topf (12) angeordnet ist und einen Einlass (14) dichtend von einem Auslass (15) trennt, wobei das Filterelement (16) über Führungsnasen (27, 28) verfügt, **dadurch gekennzeichnet, dass** an einer unteren Endscheibe (26) des Filterelementes (16) am Umfang verteilte Führungsnasen (28) angeordnet sind, wobei diese Führungsnasen (28) das Filterelement (16) in dem Topf (12) fixieren, wobei der Topf (12) über eine axiale und radiale Elementführung (29) verfügt, wobei beim Lösen des Topfes (12) vom Filterkopf (11) das Filterelement (16) aus der Elementführung (29) gleitet und sich axial nach oben bewegt, wodurch ein Volumen (V) freigegeben wird, in das eine Flüssigkeit einströmen kann, welche aus höher gelegenen Bereichen des Flüssigkeitsfilters (10) in den Topf (12) strömt.

2. Flüssigkeitsfilter nach Anspruch 1, **dadurch gekennzeichnet, dass** die axiale Position des Filterelements (16) durch eine Elementführung (29) definiert ist, in welcher die Führungsnasen (28) geführt sind.

3. Flüssigkeitsfilter nach Anspruch 2, **dadurch gekennzeichnet, dass** die Elementführung (29) über einen Anschlag (37) in Montage-Drehrichtung des Topfes (12) verfügt, so dass ein Überdrehen des Filterelementes (16) in dem Topf (12) verhinderbar ist.

4. Flüssigkeitsfilter nach Anspruch 2 oder 3, **dadurch gekennzeichnet, dass** die Elementführung (29) über einen Absatz (38) in Axialrichtung verfügt, an welcher das Filterelement (16) durch die Führungsnasen (28) bei der Demontage in dem Topf (12) axial arretierbar ist.

5. Flüssigkeitsfilter nach einem der vorangehenden Ansprüche, **dadurch gekennzeichnet, dass** die Führungsnasen (28) gleichmäßig am Umfang verteilt angeordnet sind.

6. Flüssigkeitsfilter nach einem der vorangehenden Ansprüche, **dadurch gekennzeichnet, dass** das Filterelement (16), insbesondere an seiner oberen Endscheibe (25), über eine Tropfleitrippe verfügt, welche um das Filterelement umlaufend angeordnet ist.

## Claims

1. Liquid filter, in particular for motor vehicles, featuring a filter head (11), a pot (12) and a filter element (16), wherein the filter element (16) is disposed in the pot (12) and sealingly separates an inlet (14) from an outlet (15), wherein the filter element (16) has guiding projections (27, 28), **characterized in that** guiding projections (28) are disposed around the circumference at a bottom end disk (26) of the filter element (16), wherein these guiding projections (28) fix the filter element (16) in the pot (12), wherein the pot (12) has an axial and radial element guide (29), wherein the filter element (16) slides out of the element guide (29) when the pot (12) is loosened from the filter head (11) and moves axially to the top so that a volume (V) is released into which a liquid can flow which flows from higher sections of the liquid filter (10) into the pot (12).

2. Liquid filter according to claim 1, **characterized in that** the axial position of the filter element (16) is defined by an element guide (29) into which are introduced the guiding projections (28).

3. Liquid filter according to claim 2, **characterized in that** the element guide (29) has a stop (37) in mounting direction of rotation of the pot (12) so that an excessive rotation of the filter element (16) in the pot (12) can be avoided.

4. Liquid filter according to claim 2 or 3, **characterized in that** the element guide (29) has a shoulder (38) in axial direction against which the filter element (16) can be axially locked by the guiding projections (28) when dismounting the pot (12).

5. Liquid filter according to one of the above claims, **characterized in that** the guiding projections (28) are uniformly disposed around the circumference.

6. Liquid filter according to one of the above claims, **characterized in that** the filter element (16) has, in particular at its upper end disk (25), a drip guide rib which is disposed circumferentially around the filter element.

## Revendications

1. Filtre à liquide, en particulier pour des véhicules automobiles, présentant une tête de filtre (11), un pot (12) et un élément filtrant (16), l'élément filtrant (16) étant disposé dans le pot (12) et séparant de manière étanche une entrée (14) d'une sortie (15), l'élément filtrant (16) étant pourvu d'ergots de guidage (27, 28), **caractérisé en ce que** des ergots de guidage (28) répartis sur la circonférence sont disposés sur un disque d'extrémité inférieur (26) de l'élément filtrant (16), ces ergots de guidage (28) fixant l'élément filtrant (16) dans le pot (12), le pot (12) disposant d'un guide-élément axial et radial (29), l'élément filtrant (16) glissant du guide-élément (29) lors du desserrage du pot (12) de la tête de filtre (11) et se déplaçant en sens axial vers le haut, libérant ainsi un volume (V) dans lequel peut s'introduire un liquide provenant de zones supérieures du filtre à liquide (10) et coulant dans le pot (12).

2. Filtre à liquide selon la revendication 1, **caractérisé en ce que** la position axiale de l'élément filtrant (16) est définie par un guide-élément (29) dans lequel sont guidés les ergots de guidage (28).

3. Filtre à liquide selon la revendication 2, **caractérisé en ce que** le guide-élément (29) est doté d'une butée (37) dans le sens de rotation de montage du pot (12) permettant d'éviter une rotation excessive de l'élément filtrant (16) dans le pot (12).

4. Filtre à liquide selon la revendication 2 ou 3, **caractérisé en ce que** le guide-élément (29) est pourvu d'un épaulement (38) en sens axial contre lequel l'élément filtrant (16) peut être bloqué en sens axial par les ergots de guidage (28) lors du démontage dans le pot (12).

5. Filtre à liquide selon l'une des revendications précédentes, **caractérisé en ce que** les ergots de guidage (28) sont réparties de manière uniforme sur la circonférence.

6. Filtre à liquide selon l'une des revendications précédentes, **caractérisé en ce que** l'élément filtrant (16) dispose, en particulier au niveau de son disque d'extrémité supérieur (25), d'une nervure de guidage de gouttes qui entoure l'élément filtrant.
